# EUROPEAN PATENT SPECIFICATION

(11) **EP 2 564 978 B1**
(45) Date of publication and mention of the grant of the patent: **18.04.2018**
(21) Application number: 12181179.8
(22) Date of filing: 21.08.2012
(51) Int. Cl.: B23K 35/30, C22C 19/05, B23P 6/00

(54) **Filler metal chemistry for improved weldability of super alloys**
Füllmetallchemie für verbesserte Schweissbarkeit von Superlegierungen
Chimie de métal d'apport pour soudabilité améliorée des superalliages

(30) Priority: 29.08.2011 US 201113219993
(43) Date of publication of application: 06.03.2013
(73) Proprietor: General Electric Company, Schenectady, NY 12345 (US)
(72) Inventor: Cui, Yan, Greenville, SC 29615 (US); Kottilingam, Srikanth Chandrudu, Greenville, SC 29615 (US); Lin, Dechao, Greenville, SC 29615 (US); Tollison, Brian Lee, Greenville, SC 29615 (US)
(74) Representative: Foster, Christopher Michael

(56) References cited:
- EP-A1- 1 410 872
- EP-A1- 1 777 312
- EP-A1- 2 008 757
- EP-A1- 2 305 415
- JP-A- 8 174 269
- US-A- 3 632 319
- M.B. Henderson, D. Arrellb, M. Heobel, R. Larssonb and G. Marchantc: "Nickel-Based Superalloy Welding Practices for Industrial Gas Turbine Applications", TMS Joining, Repair andRejuvenation of Superalloys , 20 November 2002 (2002-11-20), XP002685693, Retrieved from the Internet: URL:http://www.msm.cam.ac.uk/phase-trans/2 002/papers/APNickelWeldv2.pdf [retrieved on 2012-10-22]
- EOS: "Material data sheet EOS NickelAlloy IN625", EOS GmbH Electro Optical Systems , October 2010 (2010-10), XP002685694, Retrieved from the Internet: URL:http://www.detekt.com.tw/download/eos/ 4%E6%9D%90%E6%96%99%E7%A8%AE%E9%A1%9E/Meta l/NiAll-IN625-M270_Material_data_sheet_10- 10_en.pdf [retrieved on 2012-10-22]
- ThyssenKrupp VDM: "Nicrofer® 5120 CoTi - alloy C-263 Material Data Sheet No 4020", ThyssenKrupp VDM , February 1993 (1993-02), XP002685695, Retrieved from the Internet: URL:http://www.thyssenkrupp-vdm.com/downlo ads/materialdatenblaetter/?tx_ttnews%5Bcat %5D=28 [retrieved on 2012-10-22]

## Description

### BACKGROUND OF THE INVENTION

The subject matter disclosed herein relates to the art of metal joining and, more particularly, to a filler rod metal chemistry for joining components.

High strength and oxidation resistant alloys such as nickel-based super alloys are widely used in the construction of turbomachines. Super alloys possess strength, weight, durability, and temperature properties desirable for use in many turbomachine components. However, in general, super alloys have poor fusion weldability due to a tendency for liquation cracking and strain age cracking (SAC). SAC is closely related to gamma prime volume fraction, which is a function of Aluminum (Al) and titanium (Ti) content. An increase in the gamma prime fraction and, in particular Al content, increases the tendency for SAC. SAC generally occurs in a weld metal adjacent to a fusion boundary (WMATFB) region and/or propagates into a heat-affected zone (HAZ) of a base metal. Material in the WMATFB region includes base metal resulting from dilution and filler metal added during welding. As such, the WMATFB region should include a chemistry that falls within a weldable material region to avoid, or at least lower, a tendency towards SAC.

If the WMATFB region chemistry falls within the weldable material region, cracking tendency is low. In a tungsten inert gas (TIG) welding process for example, a typical dilution ratio is 30:70 which means 30% of the WMATFB region includes base metal and 70% of the WMATFB region includes filler metal. Accordingly, filler metal for welding a particular alloy should possess certain chemical composition and mechanical properties at elevated temperatures.

M B Henderson et al "Nickel-Based Superalloy Welding Practices for Industrial Gas Turbine applications" TMS Joining, Repair and Rejuvenation of Superalloys, 20 November 2002, XP002685693 describes characteristic defects found as a result of welding highly alloyed materials and reviews a number of welding processes used in the manufacture and repair of nickel alloy components.

### BRIEF DESCRIPTION OF THE INVENTION

According to one aspect of the exemplary embodiment, a filler metal chemistry consists of an amount of chromium weight of between 9.0 % and 16 % by weight, an amount of cobalt of between 7.0 % and 14 % by weight, an amount of molybdenum of between 10 % and 20 % by weight, an amount of iron of between 1.0 % and 5.0 % by weight, an amount of aluminum of between 0.05 % and 0.75 % by weight, an amount of titanium of between 0.5 % and 2.0 % by weight, an amount of manganese not to exceed 0.8 % by weight, an amount of carbon of between 0.02 % and 0.10 % by weight, an amount of titanium+aluminum of between 0.55 % and 2.75 % by weight, and balance nickel.

According to another aspect of the exemplary embodiment, a method of joining metals includes joining a first alloy to a second alloy using a filler metal consisting of an amount of chromium of between 9.0 and 16% by weight, an amount of cobalt by weight of between 7.0% and 14% by weight, an amount of molybdenum of between 10% and 20% by weight, an amount of iron of between 1.0 % and 5.0 % by weight, an amount of aluminum of between 0.05 % and 0.75 % by weight, an amount of titanium of between 0.5 % and 2.0 % by weight, an amount of manganese not to exceed 0.8 % by weight, an amount of carbon of between 0.02 % and 0.10 % by weight, an amount of titanium+aluminum of between 0.55 % and 2.75 % by weight, and balance nickel.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial cross-sectional view of a substrate having a cavity filled with filler metal in accordance with the prior art;
FIG. 2 is a partial cross-sectional view of a substrate having a cavity filled with another filler metal of the prior art; and
FIG. 3 is a partial cross-sectional view of a substrate having a cavity filled with a filler metal in accordance with an exemplary embodiment.

The detailed description explains embodiments of the invention, together with advantages and features, by way of example with reference to the drawings.

### DETAILED DESCRIPTION OF THE INVENTION

Substrates, particularly surfaces of turbomachinery, develop pits, cavities and the like. Impurities carried by inlet air, or developed by combustion pass through various portions of a turbomachine. The impurities often become deposited on internal turbomachine surfaces and, over time, eventually form pits, cavities or the like. Other impurities may create cavities or pits by impacting the internal surfaces at high velocity. If the size of the cavity or pit exceeds a desired threshold, the substrate must be repaired or replaced. Repairing the substrate is desirable due to the high cost of turbomachine components.

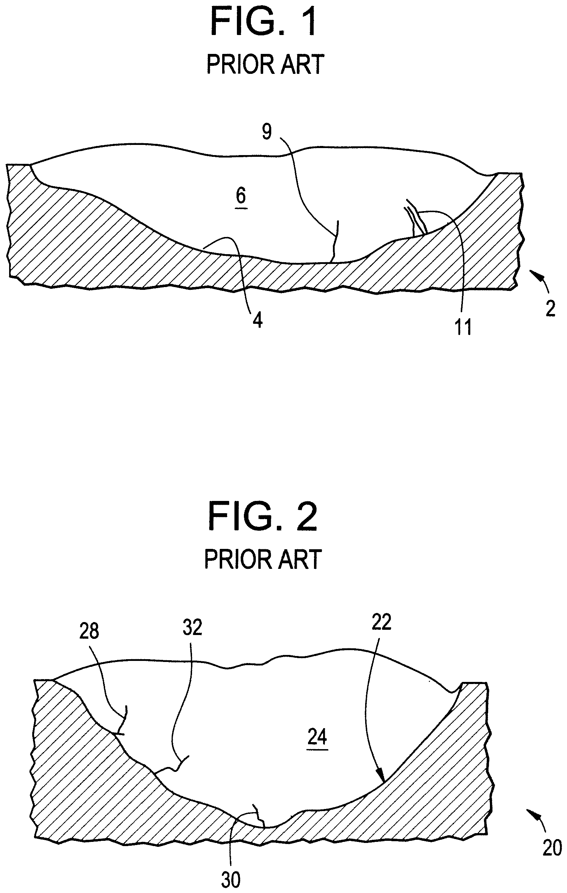

Previously, cavities and/or pits having a diameter greater than about 6.35mm (0.250") were considered unrepairable. Current filler metal chemistry, limits repair to cavities under 6.35mm (0.250"). Cavities over 6.35mm (0.250") could not be properly repaired without experiencing cracks that could lead to component failure or turbomachine damage. For example, as shown in FIG. 1, a substrate 2 includes a cavity 4 having a diameter of approximately 13.72mm (0.54"). Cavity 4 is filled with a prior art filler metal 6 which, in the exemplary embodiment shown, takes the form of a super alloy H230. Poor fusion weldablity between filler metal 6 and substrate 2 resulted in strain age cracking (SAC). The SAC occurred in filler metal 6 adjacent to a weld metal fusion boundary (WMATFB) region or the region between filler metal 6 and substrate 2. As shown, the SAC resulted in the formation of cracks 9 and 11 having a length that exceeds desired parameters. Cracks of such magnitude could result in filler metal 6 becoming dislodged from cavity 4. If dislodged, filler metal 6 may cause damage to turbomachine components.

FIG. 2 illustrates a substrate 20 including a cavity 22 having a diameter of approximately 12.7mm (0.50"). Cavity 22 is filled with another prior art filler metal, which, in the exemplary embodiment shown, takes the form of Nimonic C263. Once again, poor fusion weldability between filler metal 24 and substrate 20 resulted in strain age cracking (SAC). The SAC occurred in filler metal 24 adjacent to the WMATFB region. Additional cracking may also occur in other regions of filler metal 24 as a result of SAC. As shown, the SAC resulted in the formation of cracks 28, 30, and 32. Crack 28 has a length of approximately 1.04mm (0.041"), crack 30 has a length of approximately 0.81mm (0.032"), and crack 32 has a length of approximately 14.22mm (0.56"). Cracks 28, 30, and 32 exceed desired crack length limits. In a manner similar to that described above, cracks of such magnitude could result in filler metal 24 becoming dislodged from cavity 22.

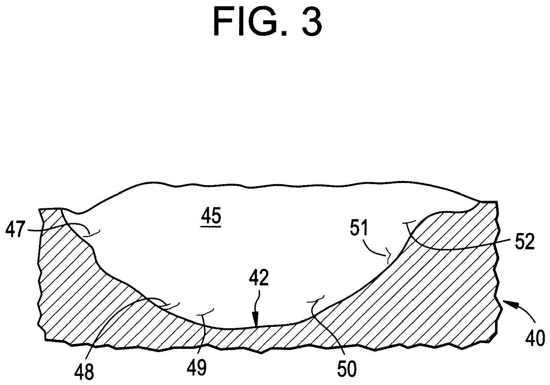

FIG. 3 illustrates a substrate 40 having a cavity 43 that is approximately 12.7mm (0.50") in diameter. Cavity 43 is filled with a filler metal 45 having a filler metal chemistry in accordance with an exemplary embodiment. Filler metal 45 is resistant to SAC. That is, while filler metal 45 does exhibit a number of cracks 47-52, each crack 47-52 is substantially smaller than the desired crack length limit. For example, crack 47 is approximately 0.508mm (0.020") in length, crack 48 is approximately 0.254mm (0.010") in length, crack 49 is approximately 0.356mm (0.014") in length, crack 50 is approximately 0.254mm (0.010") in length, crack 51 is approximately 0.305mm (0.012") in length, and crack 52 is approximately 0.203mm (0.008") in length. Experience has shown that such cracks are less likely to lead to filler metal failure. As such, filler metal 45 can be employed to repair cavities that were previously considered unrepairable using conventional methods and filler metals.

In accordance with the exemplary embodiment, filler metal 45 includes a filler metal chemistry having an amount of chromium of between 9.0 and 16% by weight, an amount of cobalt of between 7.0% and 14% by weight, an amount of molybdenum of between 10% and 20% by weight, an amount of iron of between 1.0 % and 5.0 % by weight, an amount of aluminum of between 0.05 % and 0.75 % by weight, an amount of titanium of between 0.5 % and 2.0 % by weight, an amount of manganese not to exceed 0.8 % by weight, an amount of carbon of between 0.02 % and 0.10 % by weight, an amount of titanium+aluminum of between 0.55 % and 2.75 % by weight, and the remainder being nickel. In accordance with one aspect of the exemplary embodiment, the amount of chromium is between 11% and 14% by weight, the amount of cobalt is between 10% and 11% by weight, the amount of molybdenum is between 14% and 16% by weight, the amount of iron is between 2.0 % and 4.0 % by weight, the amount of aluminum is between 0.15 % and 0.3% by weight, the amount of titanium is between 1.0 % and 1.2% by weight, the amount of carbon is between 0.02 % and 0.10 % by weight, and the amount of titanium+aluminum is between 1.2 % and 1.4% by weight, with the remainder being nickel. In accordance with another aspect of the exemplary embodiment the amount of chromium is 12.5 % by weight, the amount of cobalt is 10.5 % by weight, the amount of molybdenum is 15.0 % by weight, the amount of iron is 3.0 % by weight, the amount of aluminum is 0.25 % by weight, the amount of titanium is 1.1% by weight, the amount of carbon is 0.06 % by weight, and the amount of titanium+aluminum is 1.65 % by weight with the remainder being nickel.Other aspects of the invention are as set out in the claims. The particular filler metal chemistry for filler metal 45 allows for the repair cavities, pits etc that are larger than were previously possible. More specifically, the particular filler metal chemistry has been shown to exhibit acceptable strength, wear and adhesion properties when used to repair cavities of up to 25.4mm (1") or more in diameter. By allowing for repair of larger cavities, pits etc, the particular filler metal chemistry allows for the repair and re-use of turbomachine components that would previously have been discarded. Thus, the particular filler metal chemistry leads to a substantial cost savings. At this point it should be understood that while discussed in terms of the repair of turbomachinery, the particular filler metal chemistry can be used to repair a wide array of components. That is, filler metal 45 is compatible with a wide range of materials such as steels, stainless steels and other super alloys such as GTD111™, GTD444™ and R108™. That is, the filler metal in accordance with the exemplary embodiment can be employed to join a first member formed stainless steel with a second member formed from stainless steel. The filler metal in accordance with the exemplary embodiment can likewise be employed to join a first member formed from a super alloy including one of GTD111™, GTD444™ and R108™, with second member formed from a super alloys including one of GTD111™, GTD444™, and R108™.

## Claims

1. A filler metal chemistry consisting of:
an amount of chromium of between 9.0 and 16% by weight;
an amount of cobalt by weight of between 7.0% and 14% by weight;
an amount of molybdenum of betweent 10% and 20% by weight;
an amount of iron of between 1.0 % and 5.0 % by weight;
an amount of aluminum of between 0.05 % and 0.75 % by weight;
an amount of titanium of between 0.5 % and 2.0 % by weight;
an amount of manganese not to exceed 0.8 % by weight;
an amount of carbon of between 0.02 % and 0.10 % by weight;
an amount of titanium+aluminum of between 0.55 % and 2.75 % by weight; and balance nickel.

2. The filler metal chemistry according to claim 1, wherein the amount of chromium is between 11 % and 14% by weight.

3. The filler metal chemistry according to claim 1 or claim 2, wherein the amount of chromium is 12.5 % by weight.

4. The filler metal chemistry according to any preceding claim, wherein the amount of cobalt is between 10% and 11% by weight.

5. The filler metal chemistry according to any preceding claim, wherein the amount of cobalt is 10.5 % by weight.

6. The filler metal chemistry according to any preceding claim, wherein the amount of molybdenum is between 14% and 16% by weight.

7. The filler metal chemistry according to any preceding claim, wherein the amount of molybdenum is 15.0 % by weight.

8. The filler metal chemistry according to any preceding claim, wherein the amount of iron is between 2.0 % and 4.0 % by weight, preferably 3.0 % by weight.

9. The filler metal chemistry according to any preceding claim, wherein the amount of aluminum is between 0.15 % and 0.3% by weight, preferably 0.25 % by weight.

10. The filler metal chemistry according to any preceding claim, wherein the amount of titanium is between 1.0 % and 1.2% by weight, preferably 1.1 % by weight.

11. The filler metal chemistry according to any preceding claim, wherein the amount of carbon is between 0.02 % and 0.10 % by weight, preferably 0.06 % by weight.

12. The filler metal chemistry according to any preceding claim, wherein the amount of titanium+aluminum is between 1.2 % and 1.4% by weight.

13. The filler metal chemistry according to claim, 1 wherein the amount of titanium+aluminum is 1.65% by weight.

14. A method of joining metals, the method comprising:
joining a first alloy to a second alloy using a filler metal consisting of
an amount of chromium of between 9.0 and 16% by weight, an amount of cobalt by weight of between 7.0% and 14% by weight, an amount of molybdenum of between 10% and 20% by weight, an amount of iron of between 1.0 % and 5.0 % by weight, an amount of aluminum of between 0.05 % and 0.75 % by weight, an amount of titanium of between 0.5 % and 2.0 % by weight, an amount of manganese not to exceed 0.8 % by weight, an amount of carbon of between 0.02 % and 0.10 % by weight, an amount of titanium+aluminum of between 0.55 % and 2.75 % by weight, and balance nickel.

15. The method of claim 14, wherein joining the first alloy to the second alloy includes joining a first super alloy to a second super alloy.

16. The method of claim 15, wherein joining the first super alloy to the second super alloy includes joining a first alloy including one of GTD111™, GTD444™, and R108™, and a second alloy including one of GTD111™, GTD444™, and R108™.

## Patentansprüche

1. Eine Füllmetallchemie, bestehend aus:
einer Menge Chrom zwischen 9,0 und 16 Gewicht-%;
einer Menge Kobalt nach Gewicht zwischen 7,0 und 14 Gewicht-%;
einer Menge Molybdän zwischen 10 und 20 Gewicht-%;
einer Menge Eisen zwischen 1,0 und 5,0 Gewicht-%;
einer Menge Aluminium zwischen 0,05 und 0,75 Gewicht-%;
einer Menge Titan zwischen 0,5 und 2,0 Gewicht-%;
einer Menge Mangan nicht über 0,8 Gewicht-%;
einer Menge Kohlenstoff zwischen 0,02 und 0,10 Gewicht-%;
einer Menge Titan + Aluminium zwischen 0,55 und 2,75 Gewicht-%; und
einem Rest Nickel.

2. Die Füllmetallchemie gemäß Anspruch 1, wobei die Menge Chrom zwischen 11 und 14 Gewicht-% beträgt.

3. Die Füllmetallchemie gemäß Anspruch 1 oder Anspruch 2, wobei die Menge Chrom 12,5 Gewicht-% beträgt.

4. Die Füllmetallchemie gemäß einem der vorstehenden Ansprüche, wobei die Menge Kobalt zwischen 10 und 11 Gewicht-% beträgt.

5. Die Füllmetallchemie gemäß einem der vorstehenden Ansprüche, wobei die Menge Kobalt 10,5 Gewicht-% beträgt.

6. Die Füllmetallchemie gemäß einem der vorstehenden Ansprüche, wobei die Menge Molybdän zwischen 14 und 16 Gewicht-% beträgt.

7. Die Füllmetallchemie gemäß einem der vorstehenden Ansprüche, wobei die Menge Molybdän 15,0 Gewicht-% beträgt.

8. Die Füllmetallchemie gemäß einem der vorstehenden Ansprüche, wobei die Menge Eisen zwischen 2,0 und 4,0 Gewicht-%, vorzugsweise 3,0 Gewicht-% beträgt.

9. Die Füllmetallchemie gemäß einem der vorstehenden Ansprüche, wobei die Menge Aluminium zwischen 0,15 und 0,3 Gewicht-%, vorzugsweise 0,25 Gewicht-% beträgt.

10. Die Füllmetallchemie gemäß einem der vorstehenden Ansprüche, wobei die Menge Titan zwischen 1,0 und 1,2 Gewicht-%, vorzugsweise 1,1 Gewicht-% beträgt.

11. Die Füllmetallchemie gemäß einem der vorstehenden Ansprüche, wobei die Menge Kohlenstoff zwischen 0,02 und 0,10 Gewicht-%, vorzugsweise 0,06 Gewicht-% beträgt.

12. Die Füllmetallchemie gemäß einem der vorstehenden Ansprüche, wobei die Menge Titan + Aluminium zwischen 1,2 und 1,4 Gewicht-% beträgt.

13. Die Füllmetallchemie gemäß Anspruch 1, wobei die Menge Titan + Aluminium 1,65 Gewicht-% beträgt.

14. Ein Verfahren zum Verbinden von Metallen, wobei das Verfahren umfasst:
Verbinden einer ersten Legierung mit einer zweiten Legierung unter Verwendung eines Füllmetalls bestehend aus einer Menge Chrom zwischen 9,0 und 16 Gewicht-%, einer Menge Kobalt nach Gewicht zwischen 7,0 und 14 Gewicht-%, einer Menge Molybdän zwischen 10 und 20 Gewicht-%, einer Menge Eisen zwischen 1,0 und 5,0 Gewicht-%, einer Menge Aluminium zwischen 0,05 und 0,75 Gewicht-%, einer Menge Titan zwischen 0,5 und 2,0 Gewicht-%, einer Menge Mangan nicht über 0,8 Gewicht-%, einer Menge Kohlenstoff zwischen 0,02 und 0,10 Gewicht-%, einer Menge Titan + Aluminium zwischen 0,55 und 2,75 Gewicht-%, und einem Rest Nickel.

15. Das Verfahren gemäß Anspruch 14, wobei das Verbinden der ersten Legierung mit der zweiten Legierung beinhaltet, eine erste Superlegierung mit einer zweiten Superlegierung zu verbinden.

16. Das Verfahren gemäß Anspruch 15, wobei das Verbinden der ersten Superlegierung mit der zweiten Superlegierung beinhaltet, eine erste Legierung mit einem von GTD111™, GTD444™ und R108™ mit einer zweiten Legierung mit einem von GTD111™, GTD444™ und R108™ zu verbinden.

## Revendications

1. Chimie de métal d'apport composée de :
une quantité de chrome comprise entre 9,0 et 16 % en poids ;
une quantité de cobalt en poids comprise entre 7,0 % et 14 % en poids ;
une quantité de molybdène comprise entre 10 % et 20 % en poids ;
une quantité de fer comprise entre 1,0 % et 5,0 % en poids ;
une quantité d'aluminium comprise entre 0,05 % et 0,75 % en poids ;
une quantité de titane comprise entre 0,5 % et 2,0 % en poids ;
une quantité de manganèse ne dépassant pas 0,8 % en poids ;
une quantité de carbone comprise entre 0,02 % et 0,10 % en poids ;
une quantité de titane+aluminium comprise entre 0,55 % et 2,75 % en poids ; et pour le reste du nickel.

2. Chimie de métal d'apport selon la revendication 1, dans laquelle la quantité de chrome se situe entre 11 % et 14 % en poids.

3. Chimie de métal d'apport selon la revendication 1 ou la revendication 2, dans laquelle la quantité de chrome est de 12,5 % en poids.

4. Chimie de métal d'apport selon une quelconque revendication précédente, dans laquelle la quantité de cobalt se situe entre 10 % et 11 % en poids.

5. Chimie de métal d'apport selon une quelconque revendication précédente, dans laquelle la quantité de cobalt est de 10,5 % en poids.

6. Chimie de métal d'apport selon une quelconque revendication précédente, dans laquelle la quantité de molybdène se situe entre 14 % et 16 % en poids.

7. Chimie de métal d'apport selon une quelconque revendication précédente, dans laquelle la quantité de molybdène est de 15,0 % en poids.

8. Chimie de métal d'apport selon une quelconque revendication précédente, dans laquelle la quantité de fer se situe entre 2,0 % et 4,0 % en poids, de préférence est de 3,0 % en poids.

9. Chimie de métal d'apport selon une quelconque revendication précédente, dans laquelle la quantité d'aluminium se situe entre 0,15 % et 0,3 % en poids, de préférence est de 0,25 % en poids.

10. Chimie de métal d'apport selon une quelconque revendication précédente, dans laquelle la quantité de titane se situe entre 1,0 % et 1,2 % en poids, de préférence est de 1,1 % en poids.

11. Chimie de métal d'apport selon une quelconque revendication précédente, dans laquelle la quantité de carbone se situe entre 0,02 % et 0,10 % en poids, de préférence est de 0,06 % en poids.

12. Chimie de métal d'apport selon une quelconque revendication précédente, dans laquelle la quantité de titane+aluminium se situe entre 1,2 % et 1,4 % en poids.

13. Chimie de métal d'apport selon la revendication 1, dans laquelle la quantité de titane+aluminium est de 1,65 % en poids.

14. Procédé d'assemblage de métaux, le procédé comprenant :
l'assemblage d'un premier alliage à un deuxième alliage au moyen d'un métal d'apport composé de
une quantité de chrome comprise entre 9,0 et 16 % en poids, une quantité de cobalt en poids comprise entre 7,0 % et 14 % en poids, une quantité de molybdène comprise entre 10 % et 20 % en poids, une quantité de fer comprise entre 1,0 % et 5,0 % en poids, une quantité d'aluminium comprise entre 0,05 % et 0,75 % en poids, une quantité de titane comprise entre 0,5 % et 2,0 % en poids, une quantité de manganèse ne dépassant pas 0,8 % en poids, une quantité de carbone comprise entre 0,02 % et 0,10 % en poids, une quantité de titane+aluminium comprise entre 0,55 % et 2,75 % en poids, et pour le reste du nickel.

15. Procédé de la revendication 14, dans lequel l'assemblage du premier alliage au deuxième alliage comporte l'assemblage d'un premier superalliage à un deuxième superalliage.

16. Procédé de la revendication 15, dans lequel l'assemblage du premier superalliage au deuxième superalliage comporte l'assemblage d'un premier alliage comportant un des alliages GTD111™, GTD444™ et R108™, et d'un deuxième alliage comportant un des alliages GTD111™, GTD444™ et R108™.
